# EUROPEAN PATENT SPECIFICATION

(11) **EP 4 080 817 B1**
(45) Date of publication and mention of the grant of the patent: **15.11.2023**
(21) Application number: 19956427.9
(22) Date of filing: 18.12.2019
(51) Int. Cl.: H04L 9/32, H04L 9/00

(54) **GUARANTEE CONTROL METHOD, INFORMATION PROCESSING DEVICE, AND GUARANTEE CONTROL PROGRAM**
GARANTIEREGELUNGSVERFAHREN, INFORMATIONSVERARBEITUNGSVORRICHTUNG UND GARANTIEREGELUNGSPROGRAMM
PROCÉDÉ DE COMMANDE DE GARANTIE, DISPOSITIF DE TRAITEMENT D'INFORMATIONS ET PROGRAMME DE COMMANDE DE GARANTIE

(43) Date of publication of application: 26.10.2022
(73) Proprietor: FUJITSU LIMITED, Kawasaki-shi, Kanagawa 211-8588 (JP)
(72) Inventor: SAKAMOTO, Takuya, Kawasaki-shi, Kanagawa 211-8588 (JP)
(74) Representative: Hoffmann Eitle
(86) International application number: PCT/JP2019/049715
(87) International publication number: WO 2021/124498

(56) References cited:
- WO-A1-2011/007697
- WO-A1-2011/129380
- JP-A- 2002 215 027
- JP-A- 2009 146 154
- JP-A- 2009 199 573
- JP-A- 2009 200 696
- US-A1- 2010 115 281
- US-A1- 2011 035 241
- US-A1- 2012 124 379
- US-A1- 2017 033 934
- US-B2- 9 154 306
- US-B2- 10 079 686
- JAN CAMENISCH ET AL: "Efficient Attributes for Anonymous Credentials (Extended Version)", IACR, INTERNATIONAL ASSOCIATION FOR CRYPTOLOGIC RESEARCH, vol. 20100927:130550, 27 September 2010 (2010-09-27), pages 1-29, XP061004247, [retrieved on 2010-09-27]
- CAMENISCH, J. et al.: "Composable & modular anonymous credentials: definitions and practical constructions", CryptologyePrint Archive, Report 2015/580, 2015, pages 1-43, XP061018718, Retrieved from the Internet: URL:https://eprint.iacr.org/2015/580
- CAMENISCH, J. et al.: "Efficient attributes for anonymous credentials", Proceedings of the 15th ACM Conference on Computer and Communications Security, vol. 4, 2008, pages 345-356, XP058344878, DOI: 10.1145/1455770.1455814

## Description

### TECHNICAL FIELD

The present invention relates to a guaranteed control method and the like.

### BACKGROUND ART

In recent years, personal credit information is being managed electronically. For example, there is Hyperledger Indy (registered trademark) for managing personal credit information using a blockchain. In Hyperledger Indy, an individual has an electronically signed certificate issued by a trusted institution and, by presenting this certificate, can present the individual's credit information. At the presentation destination, the validity of the certificate is verified by searching the blockchain for the public key of the institution that issued the certificate and verifying whether the signature is made with the private key corresponding to the public key.

However, there is a case where an individual does not prefer to disclose information that does not have to be disclosed to the presentation destination. Nevertheless, since the electronic signature is given to the certificate, the verification of the validity of the certificate is not usually allowed without disclosing the entire certificate.

Thus, a technique for verifying the validity of the certificate by concealing a part of the information in the certificate, using the technique of zero-knowledge proof has been disclosed. The zero-knowledge proof is an approach in which the prover proves, for a verifier, that "a statement is true" without giving the verifier any knowledge other than "the statement is true" (for example, refer to Patent Document 1). For example, a commitment operation is conducted on secret information s to generate a commitment c, and the prover causes the verifier to confirm to "know" the secret information s of the commitment c (for example, refer to Patent Document 2).

### CITATION LIST

### [PATENT DOCUMENT]

Patent Document 1: Japanese Laid-open Patent Publication No. 2016-208107
Patent Document 2: Japanese Laid-open Patent Publication No. 11-249560

Patent publication US 2012/124379 shows a guaranteed control method for a computer to execute a process comprising acquiring certificate data that contains a plurality of pieces of attribute information.

### SUMMARY

### [TECHNICAL PROBLEM]

Incidentally, there is an information bank as a business operator to which data such as purchase data linked with personal information is deposited from an individual and that provides the data after anonymizing it in order to utilize the data. As an example of utilizing data deposited by an individual as in the information bank, there are data users who analyze purchase data to use for marketing. Such data users, in some cases, prefer to know about the data as to what attributes a person to which the data belongs has.

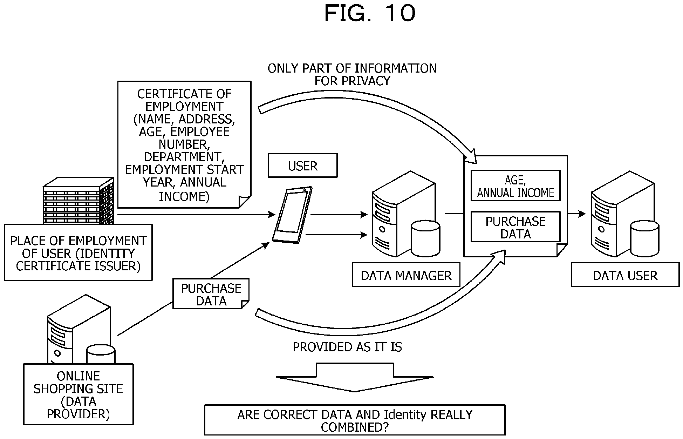

However, for example, in order for the data users to acquire and use data from the information bank, it is important to acquire the attributes of the owner linked with this data, but there is a disadvantage that it is difficult to acquire trustable attributes of the owner linked with this data. This disadvantage will be described with reference to FIG. 10.

FIG. 10 is a diagram illustrating a disadvantage when a data user uses data. As illustrated in FIG. 10, for example, a user provides a data user with the own purchase data and user attributes desired by the data user through a data manager (information bank). Here, it is assumed that the user attributes desired by the data user are age and annual income. However, the data provider of an online shopping site, which is a provision source of the purchase data, manages the personal attributes involved in providing the purchase data, but sometimes does not have the attributes (age and annual income) desired by the data user. Even if the data provider has the attributes (age and annual income) desired by the data user, these attributes may be likely to have been registered with values different from the actual values and sometimes are not the correct attributes of the user. In addition, the user may falsely provide the attributes desired by the data user when providing the purchase data through the data manager (information bank). In other words, the user may be likely to provide the data of another person as a set with the own attributes or to provide the own data as a set with the attributes of another person. Therefore, it is difficult for the data user to acquire the correct combination of the data and attributes of the user.

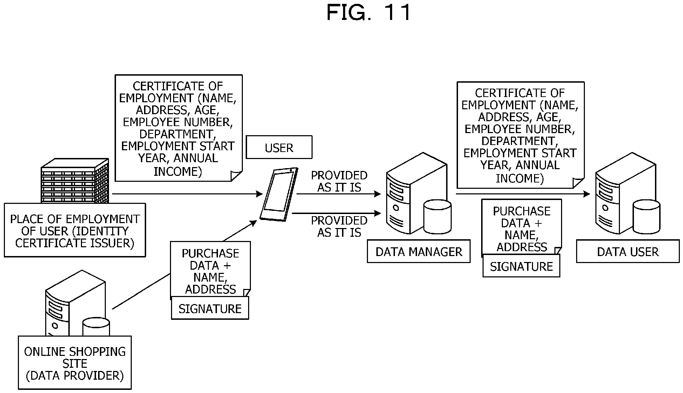

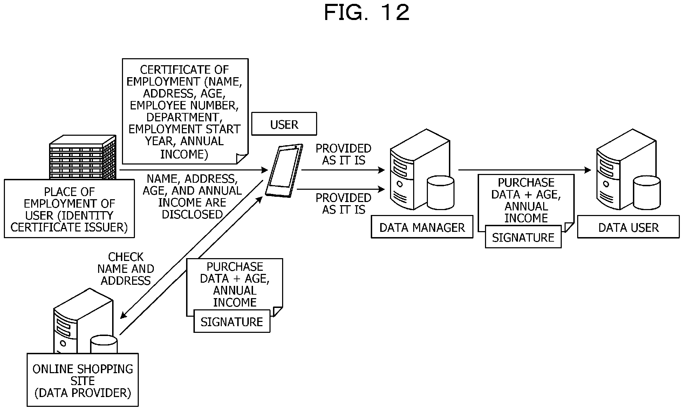

Here, a reference example in which the data user can confirm the correct combination of the data and attributes will be described with reference to FIGs. 11 and 12. FIGs. 11 and 12 are diagrams illustrating reference examples in which the correct combination of the data and attributes can be confirmed.

In the reference example illustrated in FIG. 11, the issuer who issues the certificate proving the identity issues a certificate incorporating attributes that specify the individual and other attributes to the user. The user discloses the attributes that specify the individual to the data provider. The data provider signs data in which the attributes (name and address) that can specify the individual are added to the purchase data to be provided. The user provides the signed data to the data user through the data manager. At this time, the user discloses personal identification information (for example, a certificate) and the attributes (age and annual income) desired by the data user to the data user. Then, by confirming the identity from the personal identification information (for example, a certificate) and the attributes (name and address) that can specify the individual, the data user is allowed to confirm that the purchase data and the attributes (age and annual income) of the same person are correctly combined. However, in this method of the reference example, the personal identification information has to be disclosed to the data user.

In addition, in the reference example illustrated in FIG. 12, the issuer who issues the certificate proving the identity issues a certificate incorporating attributes that specify the individual and other attributes to the user. The user discloses the attributes desired by the data user to the data provider in addition to the attributes that specify the individual. The data provider signs data in which the attributes desired by the data user as well as the attributes that can specify the individual are added to the purchase data to be provided. The user provides the signed data to the data user through the data manager. Then, by being provided with this proved data, the data user is allowed to confirm that the purchase data and the attributes of the same person are correctly combined. However, in this method of the reference example, the attributes desired by the data user has to be disclosed to the data provider.

In one aspect, the present invention aims to provide the correct combination of data and attribute information while restricting the disclosure of personal attribute information.

### [SOLUTION TO PROBLEM]

In one mode of a guaranteed control method, a computer executes: acquiring certificate data that contains a plurality of pieces of attribute information; transmitting hash values of the plurality of pieces of attribute information to a data providing device; disclosing first attribute information that identifies an individual, among the plurality of pieces of attribute information, to the data providing device by zero-knowledge proof that uses the hash values of the plurality of pieces of attribute information; receiving, from the data providing device, provided data that corresponds to the first attribute information, the hash values of the plurality of pieces of attribute information, and signature information of data that contains the provided data and the hash values of the plurality of pieces of attribute information; transmitting the provided data, the hash values of the plurality of pieces of attribute information, and the signature information to a data using device; and disclosing second attribute information wanted by the data using device, among the plurality of pieces of attribute information, to the data using device by the zero-knowledge proof that uses the hash values of the plurality of pieces of attribute information.

According to an aspect of the embodiments, a guaranteed control method executed by a computer and includes acquiring certificate data that contains a plurality of pieces of attribute information; transmitting hash values of the plurality of pieces of attribute information to a data providing device; disclosing first attribute information that identifies an individual, among the plurality of pieces of attribute information, to the data providing device by zero-knowledge proof that uses the hash values of the plurality of pieces of attribute information; receiving, from the data providing device, provided data that corresponds to the first attribute information, the hash values of the plurality of pieces of attribute information, and signature information of data that contains the provided data and the hash values of the plurality of pieces of attribute information; transmitting the provided data, the hash values of the plurality of pieces of attribute information, and the signature information to a data using device; and disclosing second attribute information wanted by the data using device, among the plurality of pieces of attribute information, to the data using device by the zero-knowledge proof that uses the hash values of the plurality of pieces of attribute information.

### [ADVANTAGEOUS EFFECTS OF INVENTION]

According to one mode, the correct combination of data and attribute information may be provided while the disclosure of personal attribute information is restricted.

### BRIEF DESCRIPTION OF DRAWINGS

FIG. 1 is a block diagram illustrating a functional configuration of a guaranteed control system including a user device according to an embodiment;
FIG. 2 is a diagram illustrating a functional configuration of the user device according to the embodiment;
FIG. 3 is a diagram illustrating a functional configuration of a data providing device according to the embodiment;
FIG. 4 is a diagram illustrating a functional configuration of a data management device according to the embodiment;
FIG. 5 is a diagram illustrating a functional configuration of a data using device according to the embodiment;
FIG. 6 is a diagram illustrating a functional configuration of an issuing institution according to the embodiment;
FIG. 7 is a diagram illustrating an example of guaranteed control according to the embodiment;
FIG. 8A and FIG. 8B are diagrams illustrating an example of a guaranteed control sequence according to the embodiment;
FIG. 9 is a diagram illustrating an example of a computer that executes a guaranteed control program.
FIG. 10 is a diagram illustrating a disadvantage when a data user uses data;
FIG. 11 is a diagram illustrating a reference example in which the correct combination of data and attributes can be confirmed; and
FIG. 12 is a diagram illustrating a reference example in which the correct combination of data and attributes can be confirmed.

### DESCRIPTION OF EMBODIMENTS

Hereinafter, embodiments of a guaranteed control method, an information processing device, and a guaranteed control program disclosed in the present application will be described in detail with reference to the drawings. Note that the embodiments do not limit the present invention.

### [Embodiments]

### [Functional Configuration of Guaranteed Control System]

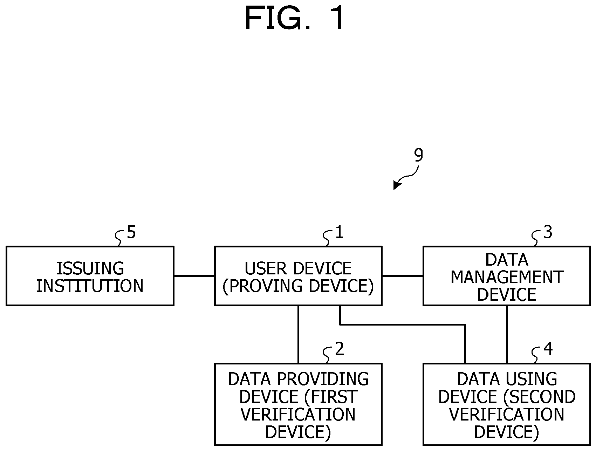

FIG. 1 is a block diagram illustrating a functional configuration of a guaranteed control system including a user device according to an embodiment. A guaranteed control system 9 according to the embodiment includes a user device 1, a data providing device 2, a data management device 3, a data using device 4, and an issuing institution 5. The user device 1 is connected to the data management device 3, the data providing device 2, the data using device 4, and the issuing institution 5 by a network. Note that, in the guaranteed control system 9 according to the embodiment, a case where the user device 1 provides data regarding a user and user attributes desired by the data using device 4 to the data using device 4 through the data management device 3 will be described. The guaranteed control system 9 guarantees, for the data using device 4, the correctness of the combination of the data regarding the user and the user attributes desired by the data using device 4.

The issuing institution 5 issues a certificate given an electronic signature to the user device 1 via the network. The certificate contains a plurality of pieces of attribute information, including identification information of the individual. The issuing institution 5 mentioned here means a trusted institution that issues electronic certificates. For example, the issuing institution 5 includes a certification authority (CA), a company, and the like.

The user device 1 acquires the certificate containing a plurality of pieces of attribute information. The user device 1 transmits proof information relating to the plurality of piece of attribute information of the user, which is used for zero-knowledge proof, to the data providing device 2 and also discloses personal identification information that identifies the user, among the plurality of pieces of attribute information, to the data providing device 2 to be described later. The user device 1 proves the validity of the personal identification information of the user by the zero-knowledge proof using the proof information and transmits verification information created from the certificate to the data providing device 2. The user device 1 transmits signature information (association data) obtained by signing data provided from the data providing device 2 and the proof information, to the data using device 4 through the data management device 3. The user device 1 discloses attribute information desired by the data using device 4 to the data using device 4. The user device 1 proves the validity of the disclosed attribute information by the zero-knowledge proof using the proof information and transmits the verification information created from the certificate to the data using device 4. This allows the user device 1 to disclose the attribute information desired by the data using device 4 to the data using device 4 together with the data without disclosing the personal identification information of the user to the data using device 4. In addition, the user device 1 is allowed to provide the data using device 4 with the correct combination of the data and attribute information. Note that the functional configuration of the user device 1 will be described later.

Here, the zero-knowledge proof is an approach in which the prover proves, for a verifier, that "a statement is true" without giving the verifier any knowledge other than "the statement is true". For example, a commitment operation is conducted on secret information s to generate a commitment c, and the prover causes the verifiers to confirm to "know" the secret information s of c. The prover mentioned here is the user device 1. The verifiers mentioned here are the data providing device 2 and the data using device 4. That is, even when only a part of the attribute information contained in the certificate is disclosed and the other attribute information is kept secret, the user device 1 can prove the validity of the disclosed part of the attribute information, using the zero-knowledge proof.

The data providing device 2 provides data. For example, the data providing device 2 accepts, from the user device 1, the personal identification information of the user who provides the data and the proof information used for the zero-knowledge proof. The data providing device 2 accepts the verification information from the user device 1. The data providing device 2 verifies the validity of the disclosed personal identification information by the zero-knowledge proof, based on the proof information and the verification information. Then, the data providing device 2 associates the data corresponding to the personal identification information with the proof information and provides the user device 1 with the signature information obtained by signing the association data. Note that the functional configuration of the data providing device 2 will be described later.

The data management device 3 manages anonymized data linked with the personal identification information of the user for the purpose of utilizing the data of the user. That is, the data management device 3 corresponds to, for example, an information bank. Note that the functional configuration of the data management device 3 will be described later.

The data using device 4 uses data. For example, the data using device 4 accepts, from the data management device 3, the signature information obtained by signing the data corresponding to the personal identification information and the proof information (association data) of the user. The data using device 4 accepts the desired attribute information and the verification information of the user from the user device 1. The data using device 4 verifies the validity of the disclosed attribute information of the user by the zero-knowledge proof, based on the proof information and the verification information. Note that the functional configuration of the data using device 4 will be described later.

### [Functional Configuration of User Device]

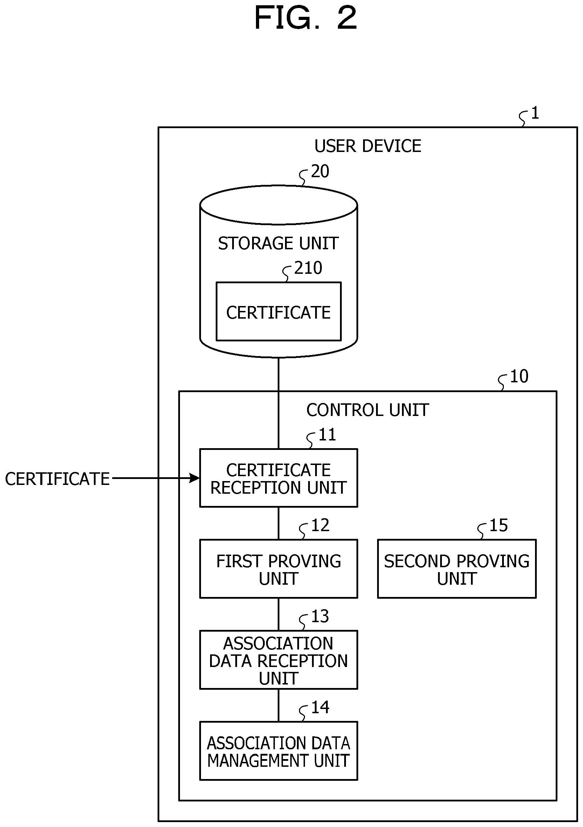

FIG. 2 is a diagram illustrating a functional configuration of the user device according to the embodiment. As illustrated in FIG. 2, the user device 1 has a control unit 10 and a storage unit 20.

The control unit 10 includes an internal memory for storing a program prescribing various processing procedures and control data and executes diverse types of processing using the program and the control data. Additionally, the control unit 10 corresponds to, for example, an integrated circuit such as an application specific integrated circuit (ASIC) or a field programmable gate array (FPGA) or an electronic circuit such as a central processing unit (CPU) or a micro processing unit (MPU). Furthermore, the control unit 10 includes a certificate reception unit 11, a first proving unit 12, an association data reception unit 13, an association data management unit 14, and a second proving unit 15. Note that the certificate reception unit 11 is an example of an acquisition unit. The first proving unit 12 is an example of a first disclosure unit. The association data reception unit 13 is an example of a reception unit. The second proving unit 15 is an example of a second disclosure unit.

The storage unit 20 corresponds to, for example, a storage device such as a non-volatile semiconductor memory element such as a flash memory or Ferroelectric Random Access Memory (FRAM) (registered trademark). Furthermore, the storage unit 20 stores a certificate 210.

The certificate reception unit 11 receives the signed certificate 210 from the issuing institution 5. The signed certificate 210 contains, for example, a character string of each attribute and a hash value for the character string of each attribute for each attribute. In addition, the certificate reception unit 11 stores the received certificate 210 in the storage unit 20. Note that the hash value for the character string of the attribute is called a commitment.

The first proving unit 12 proves the validity of the personal identification information of the user to be disclosed to the data providing device 2. For example, the first proving unit 12 logs in to the data providing device 2. The first proving unit 12 requests the data providing device 2 to provide its own data. The request for provision contains its own personal identification information. The first proving unit 12 transmits the commitments of a plurality of attributes contained in the certificate 210 to the data providing device 2 as proof information. The first proving unit 12 receives a random value (nonce) from the data providing device 2 and proves the validity of the disclosed personal identification information using the nonce and the proof information by the zero-knowledge proof. The first proving unit 12 generates the verification information used for verification, from the certificate 210. Then, the first proving unit 12 transmits the generated verification information to the data providing device 2.

The association data reception unit 13 receives the association data from the data providing device 2. For example, the association data reception unit 13 receives the signature information obtained by signing the data corresponding to the personal identification information and the proof information of the user, as the association data.

The association data management unit 14 manages the association data. For example, the association data management unit 14 logs in to the data management device 3. The association data management unit 14 transmits the received signature information obtained by signing the data corresponding to the personal identification information and the proof information of the user, to the data management device 3 as the association data. This is because the association data is managed by the data management device 3.

The second proving unit 15 proves the validity of the attribute information to be disclosed to the data using device 4. For example, the second proving unit 15 transmits attribute information for which the disclosure has been requested, to the data using device 4 in response to the request for the disclosure of the attribute from the data using device 4. The second proving unit 15 receives a random value (nonce) from the data using device 4 and proves the validity of the disclosed attribute information using the nonce and the proof information by the zero-knowledge proof. The second proving unit 15 generates the verification information used for verification, from the certificate 210. Then, the second proving unit 15 transmits the generated verification information to the data using device 4.

### [Functional Configuration of Data Providing Device]

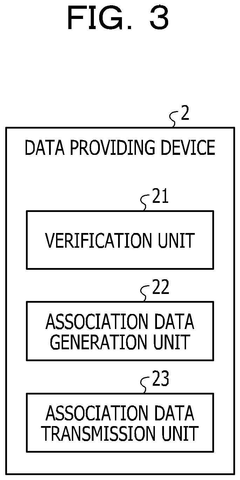

FIG. 3 is a diagram illustrating a functional configuration of the data providing device according to the embodiment. As illustrated in FIG. 3, the data providing device 2 includes a control unit and a storage unit (not illustrated). The control unit includes an internal memory for storing a program prescribing various processing procedures and control data and executes diverse types of processing using the program and the control data. Additionally, the control unit corresponds to, for example, an integrated circuit such as an application specific integrated circuit (ASIC) or a field programmable gate array (FPGA) or an electronic circuit such as a central processing unit (CPU) or a micro processing unit (MPU). Furthermore, the control unit includes a verification unit 21, an association data generation unit 22, and an association data transmission unit 23. The storage unit corresponds to, for example, a storage device such as a non-volatile semiconductor memory element such as a flash memory or Ferroelectric Random Access Memory (FRAM) (registered trademark).

The verification unit 21 verifies the validity of the personal identification information of the user. For example, the verification unit 21 receives the personal identification information of the user from the user device 1. The verification unit 21 receives the proof information indicating the commitments of the plurality of attributes contained in the certificate 210. The verification unit 21 generates a random value (nonce) and transmits the generated random value (nonce) to the user device 1. The verification unit 21 receives the verification information from the user device 1. The verification unit 21 verifies the verification information using the nonce and the proof information to verify the validity of the disclosed personal identification information. This allows the verification unit 21 to confirm that the personal identification information is the attribute information contained in the certificate 210.

The association data generation unit 22 acquires the data of the user corresponding to the personal identification information to generate the signature information obtained by signing the acquired data and the proof information, as the association data.

The association data transmission unit 23 transmits the generated association data to the user device 1. For example, the association data transmission unit 23 transmits the signature information obtained by signing the data corresponding to the personal identification information and the proof information of the user, as the association data.

### [Functional Configuration of Data Management Device]

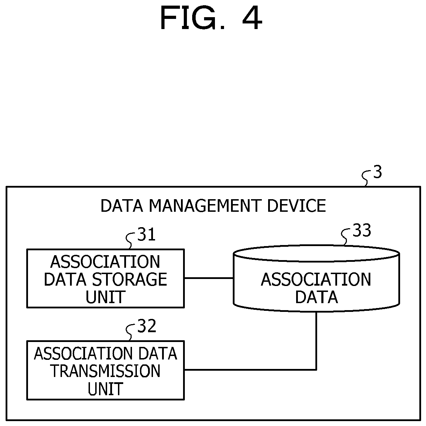

FIG. 4 is a diagram illustrating a functional configuration of the data management device according to the embodiment. As illustrated in FIG. 4, the data management device 3 includes a control unit and a storage unit (not illustrated). The control unit includes an internal memory for storing a program prescribing various processing procedures and control data and executes diverse types of processing using the program and the control data. Additionally, the control unit corresponds to, for example, an integrated circuit such as an application specific integrated circuit (ASIC) or a field programmable gate array (FPGA) or an electronic circuit such as a central processing unit (CPU) or a micro processing unit (MPU). Furthermore, the control unit includes an association data storage unit 31, an association data transmission unit 32, and association data 33. The storage unit corresponds to, for example, a storage device such as a non-volatile semiconductor memory element such as a flash memory or Ferroelectric Random Access Memory (FRAM) (registered trademark).

The association data 33 is data indicating the signature information obtained by signing the data corresponding to the personal identification information and the proof information of the user. The association data 33 is stored in a storage unit (not illustrated).

When the association data is received from the user device 1, the association data storage unit 31 stores the received association data. That is, the association data storage unit 31 stores the signature information obtained by signing the data corresponding to the personal identification information and the proof information of the user in the storage unit to manage.

The association data transmission unit 32 transmits the association data to the data using device 4 in response to the data request from the data using device 4. That is, the association data transmission unit 32 transmits the signature information obtained by signing the data and the proof information of the user to the data using device 4.

### [Functional Configuration of Data Using Device]

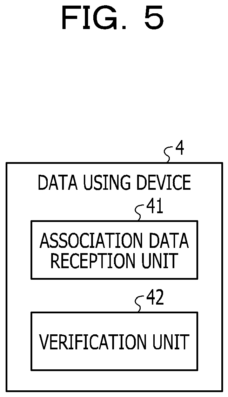

FIG. 5 is a diagram illustrating a functional configuration of the data using device according to the embodiment. As illustrated in FIG. 5, the data using device 4 includes a control unit and a storage unit (not illustrated). The control unit includes an internal memory for storing a program prescribing various processing procedures and control data and executes diverse types of processing using the program and the control data. Additionally, the control unit corresponds to, for example, an integrated circuit such as an application specific integrated circuit (ASIC) or a field programmable gate array (FPGA) or an electronic circuit such as a central processing unit (CPU) or a micro processing unit (MPU). Furthermore, the control unit includes an association data reception unit 41 and a verification unit 42. The storage unit corresponds to, for example, a storage device such as a non-volatile semiconductor memory element such as a flash memory or Ferroelectric Random Access Memory (FRAM) (registered trademark).

The association data reception unit 41 transmits a data request to the data management device 3. The association data reception unit 41 receives the association data corresponding to the data request, from the data management device 3. That is, the association data reception unit 41 receives the signature information obtained by signing the data corresponding to the personal identification information and the proof information of the user.

The verification unit 42 verifies the validity of the desired attribute information of the user. For example, the verification unit 42 verifies the signature of the signature information as the association data to confirm that the data has been provided by the data providing device 2. Note that, for signature verification, any conventional digital signature mechanism may be used. Then, the verification unit 42 requests the user device 1 to disclose the desired attribute information of the user. The verification unit 42 receives the desired attribute information of the user from the user device 1. The verification unit 42 generates a random value (nonce) and transmits the generated random value (nonce) to the user device 1. The verification unit 42 receives the verification information from the user device 1. The verification unit 42 verifies the verification information using the nonce and the proof information to verify the validity of the disclosed attribute information. This allows the verification unit 42 to confirm that the desired attribute information belongs to the legitimate user, by verifying using the proof information. In addition, the verification unit 42 can guarantee the correctness of the combination of the data and the desired attribute information by verifying the signature.

### [Functional Configuration of Issuing Institution]

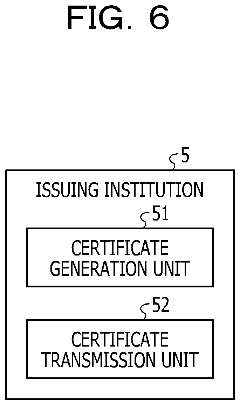

FIG. 6 is a diagram illustrating a functional configuration of the issuing institution according to the embodiment. As illustrated in FIG. 6, the issuing institution 5 includes a control unit and a storage unit (not illustrated). The control unit includes an internal memory for storing a program prescribing various processing procedures and control data and executes diverse types of processing using the program and the control data. Additionally, the control unit corresponds to, for example, an integrated circuit such as an application specific integrated circuit (ASIC) or a field programmable gate array (FPGA) or an electronic circuit such as a central processing unit (CPU) or a micro processing unit (MPU). Furthermore, the control unit includes a certificate generation unit 51 and a certificate transmission unit 52. The storage unit corresponds to, for example, a storage device such as a non-volatile semiconductor memory element such as a flash memory or Ferroelectric Random Access Memory (FRAM) (registered trademark).

The certificate generation unit 51 generates a signed certificate in response to a request from the user device 1. The certificate transmission unit 52 transmits the generated signed certificate to the user device 1.

### [Example of Guaranteed Control]

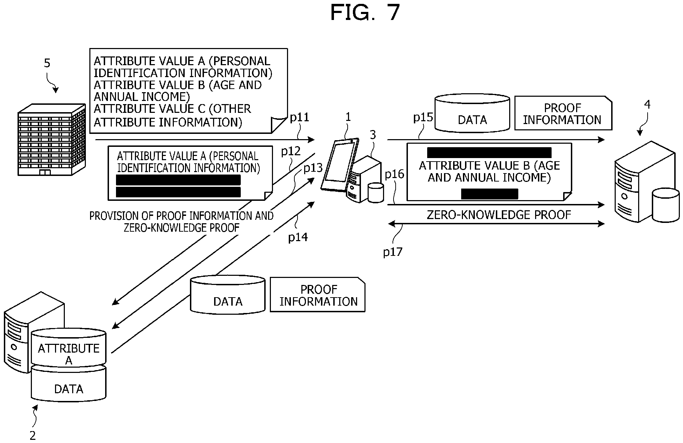

FIG. 7 is a diagram illustrating an example of guaranteed control according to the embodiment. FIG. 7 will describe a case where the user device 1 provides the data using device 4 with data corresponding to an attribute value A (personal identification information) of the user and an attribute value B (age and annual income) desired by the data using device 4 through the data management device 3.

The user device 1 receives the signed certificate 210 from the issuing institution 5 (p11). The certificate 210 contains commitments of the attribute value A (personal identification information), the attribute value B (age and annual income), and an attribute value C (other attribute information).

The user device 1 requests the data providing device 2 to provide data containing its own attribute value A (personal identification information) (p12). That is, the user device 1 discloses only its own attribute value A (personal identification information) to the data providing device 2.

Then, the user device 1 provides the commitments of the plurality of attribute values A, B, and C contained in the certificate 210 to the data providing device 2 as the proof information and performs the zero-knowledge proof with the data providing device 2 (p13). That is, the user device 1 receives a random value (nonce) from the data providing device 2 and proves the validity of the disclosed attribute value A (personal identification information) using the nonce and the proof information. The user device 1 generates the verification information from the certificate 210 and transmits the generated verification information to the data providing device 2. The data providing device 2 verifies the verification information using the nonce and the proof information, and verifies the validity of the disclosed attribute value A (personal identification information).

Then, the data providing device 2 acquires the data corresponding to the attribute value A (personal identification information) to generate the signature information obtained by signing the acquired data and the proof information, as the association data and transmits the generated signature information to the user device 1 (p14). That is, the data providing device 2 associates the data with the certificate 210 using the proof information at the time of zero-knowledge proof.

The user device 1 that has received the signature information obtained by signing the data and the proof information deposits the received signature information in the data management device 3. The data using device 4 asks for a data request from the data management device 3 and receives, from the data management device 3, the signature information obtained by signing the data corresponding to the data request and the proof information (p15). That is, the data using device 4 receives the association between the data and the certificate 210.

Then, the data using device 4 requests the user device 1 to disclose the attribute value B (age and annual income), which is the desired attribute information, and receives the attribute value B of the user (p16). That is, the user device 1 discloses only its own attribute value B to the data using device 4.

Then, the user device 1 performs the zero-knowledge proof with the data using device 4 (p17). That is, the user device 1 receives a random value (nonce) from the data providing device 2 and proves the validity of the disclosed attribute value B (age and annual income). The user device 1 generates the verification information from the certificate 210 and transmits the generated verification information to the data using device 4. The data using device 4 verifies the verification information using the nonce and the proof information to verify the validity of the disclosed attribute value B (age and annual income). This allows the data using device 4 to confirm that the desired attribute value B (age and annual income) belongs to the legitimate user, by using the proof information.

### [Guaranteed Control Sequence]

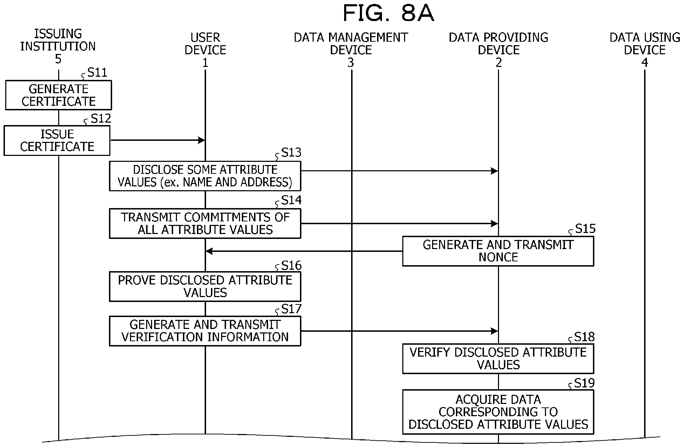

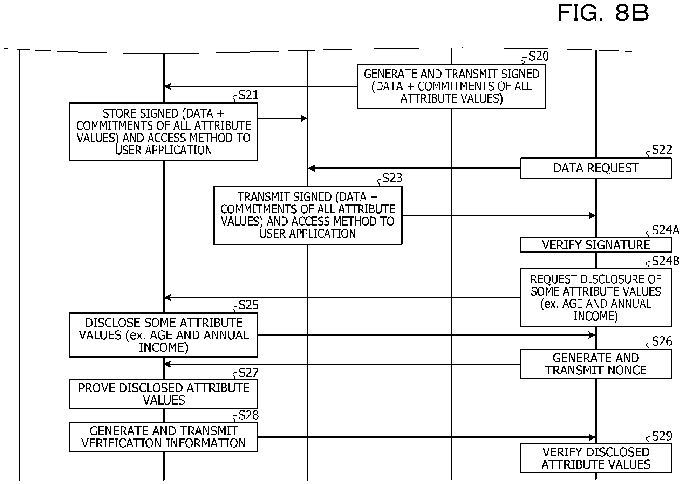

FIG. 8A and FIG. 8B are diagrams illustrating an example of a guaranteed control sequence according to the embodiment. Note that it is assumed that the user device 1 asks the issuing institution 5 to issue its own signed certificate 210.

As illustrated in FIG. 8A and FIG. 8B, the issuing institution 5 generates the signed certificate 210 of the user that has been asked for (S11). The issuing institution 5 issues the generated certificate 210 to the asking user device 1 (S12).

The user device 1 that has received the certificate 210 discloses some attribute values among a plurality of attribute values contained in the certificate 210, to the data providing device 2 (S13). Examples of some attribute values to be disclosed include the personal identification information such as name and address. In addition, the user device 1 transmits the commitments of all the attribute values contained in the certificate 210 to the data providing device 2 as the proof information (S14).

The data providing device 2 generates a nonce (random value) and transmits the generated nonce (random value) to the user device 1 (S15).

The user device 1 that has received the nonce proves the disclosed attribute values using the nonce and the proof information by the zero-knowledge proof (S16). Then, the user device 1 generates the verification information from the certificate 210 and transmits the generated verification information to the data providing device 2 (S17).

The data providing device 2 that has received the verification information verifies the verification information using the proof information and the nonce and verifies the validity of the disclosed attribute values (S18). Then, the data providing device 2 acquires the data corresponding to the disclosed attribute values (S19). Thereafter, the data providing device 2 generates the signature information obtained by signing the data and the proof information, as the association data and transmits the generated signature information to the user device 1 (S20). That is, the data providing device 2 generates the association data in which the data and the certificate 210 are associated with each other.

The user device 1 stores the signature information obtained by signing the data and the proof information and the access method to a user application, in the data management device 3 (S21). The access method to the user application mentioned here means an access method to the user application used for accessing the user device 1 from the data using device 4 that wants to use the data of the user. The data management device 3 stores the signature information obtained by signing the data and the proof information corresponding to the user and the access method to the user application in association with each other.

The data using device 4 requests data from the data management device 3 (S22).

The data management device 3 that has received the data request transmits the signature information obtained by signing the data and the proof information and the access method to the user application to the data using device 4 (S23).

The data using device 4 that has received the signature information obtained by signing the data and the proof information verifies the signature of the signature information (S24A) and confirms that the data has been provided by the data providing device 2. Note that, for signature verification, any conventional digital signature mechanism may be used. Then, the data using device 4 requests the user device 1 to disclose desired some attribute values, using the access method to the user application (S24B). Examples of some attribute values requested to be disclosed include age and annual income.

The user device 1 that has received the data request discloses some attribute values for which the data request was made, among the plurality of attribute values (S25). Here, age and annual income are disclosed.

The data using device 4 generates a nonce (random value) and transmits the generated nonce (random value) to the user device 1 (S26).

The user device 1 that has received the nonce proves the disclosed attribute values using the nonce and the proof information by the zero-knowledge proof (S27). Then, the user device 1 generates the verification information from the certificate 210 and transmits the generated verification information to the data using device 4 (S28).

The data using device 4 that has received the verification information verifies the verification information using the proof information and the nonce and verifies the validity of the disclosed attribute values (S29). This allows the data using device 4 to confirm that the desired attribute information belongs to the legitimate user. In addition, the data using device 4 can guarantee the correctness of the combination of the data and the desired attribute information.

Note that the user device 1 has been described as providing the commitments of all attribute values contained in the certificate 210 to the data providing device 2 and the data using device 4 as verification devices, as the proof information and proving the validity of the disclosed attribute values by the zero-knowledge proof. However, the user device 1 is not limited to this, and there may be a case where, in addition to the commitments of all attribute values contained in the certificate 210, the commitment of a master key (secret information that the user has) that can uniquely identify the user is used as the proof information. In such a case, the user device 1 provides the commitment of the master key to the issuing institution 5, and the issuing institution 5 includes the commitment of the master key into the certificate 210. Then, the user device 1 may provide the commitment of the master key to the verification devices to prove that the certificate 210 is its own certificate 210, by a method of proving whether or not the secret information is known, by the zero-knowledge proof.

In addition, the data using device 4 has been described as requesting the user device 1 to disclose desired some attribute values, using the access method to the user application. However, the method in which the data using device 4 accesses the user device 1 is not limited to this, and the user device 1 may be accessed by way of the data management device 3.

In addition, in the embodiment, the user device 1 and the data management device 3 have been distinguished in the description. However, the function of the data management device 3 may be incorporated into the user device 1, and the user device 1 may implement the function of the data management device 3.

In addition, in the guaranteed control system 9 according to the embodiment, credit information (for example, a public key or the like) may be managed using a blockchain. For example, while the issuing institution 5 issues the certificate 210 given the electronic signature to the user device 1, the user device 1 may acquire the public key corresponding to the private key of the signature from the blockchain to verify the validity of the certificate 210. In verifying the signature of the signature information as the association data, the data using device 4 may acquire the public key corresponding to the private key of the signature from a blockchain to confirm that the data in the association data is data that has been provided by the data providing device 2. This allows the guaranteed control system 9 to secure the trust of the access destination by using the blockchain.

### [Effects of Embodiment]

According to the above embodiment, the user device 1 acquires the certificate 210 containing a plurality of pieces of attribute information. The user device 1 transmits the hash values of the plurality of pieces of attribute information to the data providing device 2. The user device 1 discloses first attribute information that identifies the individual, among the plurality of pieces of attribute information, to the data providing device 2 by zero-knowledge proof using the hash values of the plurality of pieces of attribute information. The user device 1 receives provided data corresponding to the first attribute information, the hash values of the plurality of pieces of attribute information, and the signature information of data containing the provided data and the hash values of the plurality of pieces of attribute information, from the data providing device 2. The user device 1 transmits the provided data, the hash values of the plurality of pieces of attribute information, and the signature information to the data using device 4. The user device 1 discloses second attribute information wanted by the data using device 4, among the plurality of pieces of attribute information, to the data using device 4 by the zero-knowledge proof using the hash values of the plurality of pieces of attribute information. According to such a configuration, the user device 1 can prove the authenticity of the second attribute information of the user corresponding to the provided data by combining the information involved in the zero-knowledge proof (the hash values of the plurality of pieces of attribute information) with the provided data. In addition, the user device 1 may suppress the disclosure of undesired attribute information to each of the data providing device 2 and the data using device 4. That is, the user device 1 does not have to disclose the second attribute information to the data providing device 2 and does not have to disclose the first attribute information to the data using device 4. As a result, the user device 1 does not have to disclose its own privacy more than desired, and additionally, the data using device 4 and the data providing device 2 do not have to acquire undesired attribute information. Furthermore, the data using device 4 can give credit to the second attribute information of the user without trusting the user device 1. This is because the second attribute information of the user of the user device 1 is guaranteed by the issuing institution 5 of the certificate 210.

In addition, according to the above embodiment, the user device 1 further causes the data using device 4 to verify the signature information. According to such a configuration, the data using device 4 may verify that the provided data coupled with the signature information is the data provided by the data providing device 2. That is, the data using device 4 may verify the validity of the provided data.

In addition, according to the above embodiment, the hash values of the plurality of pieces of attribute information are the values of the commitments for each of the plurality of pieces of attribute information. According to such a configuration, the user device 1 includes the values of the commitments for each of the plurality of pieces of attribute information into the certificate 210 and provides the included values to the data providing device 2 and the data using device 4 as the verification devices. This allows the user device 1 to prove the validity of the attribute information to be disclosed by the method of proving whether or not the secret information is known, by the zero-knowledge proof.

In addition, according to the above embodiment, the hash values of the plurality of pieces of attribute information further include the value of the commitment of the master key used when the certificate 210 is generated. According to such a configuration, the user device 1 includes the commitment of the master key into the certificate 210 and provides the included commitment to the data providing device 2 and the data using device 4 as the verification devices. This allows the user device 1 to prove that the certificate 210 is its own certificate 210 by the method of proving whether or not the secret information is known, by the zero-knowledge proof.

In addition, according to the above embodiment, the proof of the certificate 210 and the proof of the signature information of the data are performed using the blockchain. According to such a configuration, the trust of the access destination may be secured by performing the proof of the certificate 210 and the proof of the signature information of the data using the blockchain.

### [Programs, etc.]

Note that each of the illustrated components of the user device 1 is not necessarily have to be physically configured as illustrated in the drawings. That is, specific forms of separation and integration of the user device 1 are not limited to the illustrated ones, and the whole or a part of the user device 1 may be configured by being functionally or physically separated and integrated in an optional unit according to various loads, use states, or the like. For example, the association data reception unit 13 and the association data management unit 14 may be integrated as one unit. Meanwhile, the first proving unit 12 may be separated into a request unit that requests data from the data providing device 2 and a proving unit that proves the validity of the disclosed information. In addition, the storage unit 20 of the user device 1 may be connected by way of a network as an external device of the user device 1.

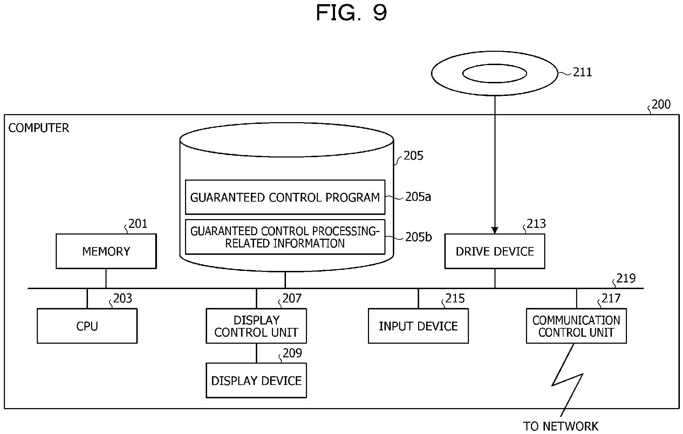

Furthermore, various types of processing described in the embodiments described above may be implemented by executing a program prepared in advance on a computer such as a personal computer or a workstation. Thus, in the following, an example of a computer that executes a guaranteed control program implementing functions similar to the functions of the user device 1 illustrated in FIG. 2 will be described. FIG. 9 is a diagram illustrating an example of a computer that executes the guaranteed control program.

As illustrated in FIG. 9, a computer 200 includes a central processing unit (CPU) 203 that executes various types of arithmetic processing, an input device 215 that accepts data input from a user, and a display control unit 207 that controls a display device 209. In addition, the computer 200 includes a drive device 213 that reads a program or the like from a storage medium, and a communication control unit 217 that exchanges data with another computer via a network. Furthermore, the computer 200 includes a memory 201 that temporarily stores various types of information and a hard disk drive (HDD) 205. Then, the memory 201, the CPU 203, the HDD 205, the display control unit 207, the drive device 213, the input device 215, and the communication control unit 217 are connected by a bus 219.

The drive device 213 is, for example, a device for a removable disk 211. The HDD 205 stores a guaranteed control program 205a and a guaranteed control processing-related information 205b.

The CPU 203 reads the guaranteed control program 205a and loads the read guaranteed control program 205a into the memory 201. The guaranteed control program 205a functions as a guaranteed control process.

For example, the guaranteed control process corresponds to each functional unit of the control unit 10. The guaranteed control processing-related information 205b corresponds to the certificate 210 and the like.

Note that the guaranteed control program 205a does not necessarily have to be stored in the HDD 205 from the beginning. For example, the program is stored in a "portable physical medium" such as a flexible disk (FD), a compact disk read only memory (CD-ROM), a digital versatile disk (DVD), a magneto-optical disk, or an integrated circuit (IC) card, which is inserted into the computer 200. Then, the computer 200 may read the guaranteed control program 205a from these media and execute the read guaranteed control program 205a.

### REFERENCE SIGNS LIST

1 User device
10 Control unit
11 Certificate reception unit
12 First proving unit
13 Association data reception unit
14 Association data management unit
15 Second proving unit
20 Storage unit
210 Certificate
2 Data providing device
21 Verification unit
22 Association data generation unit
23 Association data transmission unit
3 Data management device
31 Association data storage unit
32 Association data transmission unit
33 Association data
4 Data using device
41 Association data reception unit
42 Verification unit
5 Issuing institution
51 Certificate generation unit
52 Certificate transmission unit

## Claims

1. A guaranteed control method for a computer to execute a process comprising:
acquiring certificate data that contains a plurality of pieces of attribute information;
transmitting hash values of the plurality of pieces of attribute information to a data providing device;
disclosing first attribute information that identifies an individual among the plurality of pieces of attribute information to the data providing device by zero-knowledge proof that uses the hash values of the plurality of pieces of attribute information;
receiving, from the data providing device, provided data that corresponds to the first attribute information, the hash values of the plurality of pieces of attribute information, and signature information of data that contains the provided data and the hash values of the plurality of pieces of attribute information;
transmitting the provided data, the hash values of the plurality of pieces of attribute information, and the signature information to a data using device; and
disclosing second attribute information used by the data using device, among the plurality of pieces of attribute information, to the data using device by the zero-knowledge proof that uses the hash values of the plurality of pieces of attribute information.

2. The guaranteed control method according to claim 1, wherein the process further comprising causing the data using device to prove the signature information.

3. The guaranteed control method according to claim 1, wherein
the hash values of the plurality of pieces of attribute information are values of commitments for each of the plurality of pieces of attribute information.

4. The guaranteed control method according to claim 3, wherein
the hash values of the plurality of pieces of attribute information further include the values of the commitments for a master key used when the certificate data is generated.

5. The guaranteed control method according to claim 1, wherein
proof of the certificate data and proof of the signature information of the data are performed by using a blockchain.

6. An information processing device comprising:
an acquisition unit that acquires certificate data that contains a plurality of pieces of attribute information;
a first disclosure unit that:
transmits hash values of the plurality of pieces of attribute information to a data providing device, and
discloses first attribute information that identifies an individual among the plurality of pieces of attribute information to the data providing device by zero-knowledge proof that uses the hash values of the plurality of pieces of attribute information;
a reception unit that receives, from the data providing device, provided data that corresponds to the first attribute information, the hash values of the plurality of pieces of attribute information, and signature information of data that contains the provided data and the hash values of the plurality of pieces of attribute information; and
a second disclosure unit that:
transmits the provided data, the hash values of the plurality of pieces of attribute information, and the signature information to a data using device, and
discloses second attribute information used by the data using device, among the plurality of pieces of attribute information, to the data using device by the zero-knowledge proof that uses the hash values of the plurality of pieces of attribute information.

7. A non-transitory computer-readable storage medium storing a guaranteed control program that causes at least one computer to execute a process, the process comprising:
acquiring certificate data that contains a plurality of pieces of attribute information;
transmitting hash values of the plurality of pieces of attribute information to a data providing device;
disclosing first attribute information that identifies an individual among the plurality of pieces of attribute information to the data providing device by zero-knowledge proof that uses the hash values of the plurality of pieces of attribute information;
receiving, from the data providing device, provided data that corresponds to the first attribute information, the hash values of the plurality of pieces of attribute information, and signature information of data that contains the provided data and the hash values of the plurality of pieces of attribute information;
transmitting the provided data, the hash values of the plurality of pieces of attribute information, and the signature information to a data using device; and
disclosing second attribute information used by the data using device, among the plurality of pieces of attribute information, to the data using device by the zero-knowledge proof that uses the hash values of the plurality of pieces of attribute information.

8. The non-transitory computer-readable storage medium according to claim 7, wherein the process further comprising causing the data using device to prove the signature information.

9. The non-transitory computer-readable storage medium according to claim 7, wherein
the hash values of the plurality of pieces of attribute information are values of commitments for each of the plurality of pieces of attribute information.

10. The non-transitory computer-readable storage medium according to claim 9, wherein
the hash values of the plurality of pieces of attribute information further include the values of the commitments for a master key used when the certificate data is generated.

11. The non-transitory computer-readable storage medium according to claim 7, wherein
proof of the certificate data and proof of the signature information of the data are performed by using a blockchain.

## Patentansprüche

1. Garantiertes Steuerungsverfahren für einen Computer zum Ausführen eines Prozesses, umfassend:
Erfassen von Zertifikatsdaten, die eine Vielzahl von Stücken von Attributinformationen enthalten;
Übertragen von Hash-Werten der Vielzahl von Stücken von Attributinformationen an eine Datenbereitstellungsvorrichtung;
Offenbaren erster Attributinformationen, die ein Individuum identifizieren, aus der Vielzahl von Stücken von Attributinformationen, an die Datenbereitstellungsvorrichtung durch Zero-Knowledge-Beweis, der die Hash-Werte der Vielzahl von Stücken von Attributinformationen verwendet;
Empfangen, von der Datenbereitstellungsvorrichtung, bereitgestellter Daten, die den ersten Attributinformationen entsprechen, der Hash-Werte der Vielzahl von Stücken von Attributinformationen und Signaturinformationen von Daten, die die bereitgestellten Daten und die Hash-Werte der Vielzahl von Stücken von Attributinformationen enthalten;
Übertragen der bereitgestellten Daten, der Hash-Werte der Vielzahl von Stücken von Attributinformationen und der Signaturinformationen an eine datenverwendende Vorrichtung; und
Offenbaren zweiter Attributinformationen, die von der datenverwendenden Vorrichtung verwendet werden, aus der Vielzahl von Stücken von Attributinformationen, an die datenverwendende Vorrichtung durch den Zero-Knowledge-Beweis, der die Hash-Werte der Vielzahl von Stücken von Attributinformationen verwendet.

2. Garantiertes Steuerungsverfahren nach Anspruch 1, wobei der Prozess weiter ein Veranlassen der datenverwendenden Vorrichtung zum Nachweisen der Signaturinformationen umfasst.

3. Garantiertes Steuerungsverfahren nach Anspruch 1, wobei
die Hash-Werte der Vielzahl von Stücken von Attributinformationen Werte von Verpflichtungen für jedes der Vielzahl von Stücken von Attributinformationen sind.

4. Garantiertes Steuerungsverfahren nach Anspruch 3, wobei
die Hash-Werte der Vielzahl von Stücken von Attributinformationen weiter die Werte der Verpflichtungen für einen Hauptschlüssel einschließen, der verwendet wird, wenn die Zertifikatsdaten erzeugt werden.

5. Garantiertes Steuerungsverfahren nach Anspruch 1, wobei
der Nachweis der Zertifikatsdaten und der Nachweis der Signaturinformationen der Daten unter Verwendung einer Blockchain durchgeführt werden.

6. Informationsverarbeitungsvorrichtung, umfassend:
eine Erfassungseinheit, die Zertifikatsdaten erfasst, die eine Vielzahl von Stücken von Attributinformationen enthalten;
eine erste Offenbarungseinheit, die:
Hash-Werte der Vielzahl von Stücken von Attributinformationen an eine Datenbereitstellungsvorrichtung überträgt, und
erste Attributinformationen, die ein Individuum identifizieren, aus der Vielzahl von Stücken von Attributinformationen, an die Datenbereitstellungsvorrichtung offenbart, durch Zero-Knowledge-Beweis, der die Hash-Werte der Vielzahl von Stücken von Attributinformationen verwendet;
eine Empfangseinheit, die bereitgestellte Daten, die den ersten Attributinformationen entsprechen, die Hash-Werte der Vielzahl von Stücken von Attributinformationen und Signaturinformationen von Daten, die die bereitgestellten Daten und die Hash-Werte der Vielzahl von Stücken von Attributinformationen enthalten, von der Datenbereitstellungsvorrichtung empfängt; und
eine zweite Offenbarungseinheit, die:
die bereitgestellten Daten, die Hash-Werte der Vielzahl von Stücken von Attributinformationen und die Signaturinformationen an eine datenverwendende Vorrichtung überträgt; und
zweite Attributinformationen, die von der datenverwendenden Vorrichtung verwendet werden, aus der Vielzahl von Stücken von Attributinformationen, an die datenverwendende Vorrichtung offenbart, durch den Zero-Knowledge-Beweis, der die Hash-Werte der Vielzahl von Stücken von Attributinformationen verwendet.

7. Nichtflüchtiges computerlesbares Speichermedium, das ein garantiertes Steuerungsprogramm speichert, das mindestens einen Computer veranlasst, einen Prozess auszuführen, wobei der Prozess Folgendes umfasst:
Erfassen von Zertifikatsdaten, die eine Vielzahl von Stücken von Attributinformationen enthalten;
Übertragen von Hash-Werten der Vielzahl von Stücken von Attributinformationen an eine Datenbereitstellungsvorrichtung;
Offenbaren erster Attributinformationen, die ein Individuum identifizieren, aus der Vielzahl von Stücken von Attributinformationen, an die Datenbereitstellungsvorrichtung durch Zero-Knowledge-Beweis, der die Hash-Werte der Vielzahl von Stücken von Attributinformationen verwendet;
Empfangen, von der Datenbereitstellungsvorrichtung, bereitgestellter Daten, die den ersten Attributinformationen entsprechen, der Hash-Werte der Vielzahl von Stücken von Attributinformationen und Signaturinformationen von Daten, die die bereitgestellten Daten und die Hash-Werte der Vielzahl von Stücken von Attributinformationen enthalten;
Übertragen der bereitgestellten Daten, der Hash-Werte der Vielzahl von Stücken von Attributinformationen und der Signaturinformationen an eine datenverwendende Vorrichtung; und
Offenbaren zweiter Attributinformationen, die von der datenverwendenden Vorrichtung verwendet werden, aus der Vielzahl von Stücken von Attributinformationen, an die datenverwendende Vorrichtung durch den Zero-Knowledge-Beweis, der die Hash-Werte der Vielzahl von Stücken von Attributinformationen verwendet.

8. Nichtflüchtiges computerlesbares Speichermedium nach Anspruch 7, wobei der Prozess weiter ein Veranlassen der datenverwendenden Vorrichtung zum Nachweisen der Signaturinformationen umfasst.

9. Nichtflüchtiges computerlesbares Speichermedium nach Anspruch 7, wobei
die Hash-Werte der Vielzahl von Stücken von Attributinformationen Werte von Verpflichtungen für jedes der Vielzahl von Stücken von Attributinformationen sind.

10. Nichtflüchtiges computerlesbares Speichermedium nach Anspruch 9, wobei
die Hash-Werte der Vielzahl von Stücken von Attributinformationen weiter die Werte der Verpflichtungen für einen Hauptschlüssel einschließen, der verwendet wird, wenn die Zertifikatsdaten erzeugt werden.

11. Nichtflüchtiges computerlesbares Speichermedium nach Anspruch 7, wobei
der Nachweis der Zertifikatsdaten und der Nachweis der Signaturinformationen der Daten unter Verwendung einer Blockchain durchgeführt werden.

## Revendications

1. Procédé de commande garanti pour qu'un ordinateur exécute un processus comprenant :
l'acquisition de données de certificat qui contiennent une pluralité de fragments d'informations d'attribut ;
l'émission de valeurs de hachage de la pluralité de fragments d'informations d'attribut vers un dispositif de fourniture de données ;
la divulgation de premières informations d'attribut qui identifient un individu parmi la pluralité de fragments d'informations d'attribut au dispositif de fourniture de données par une preuve sans apport de connaissance qui utilise les valeurs de hachage de la pluralité de fragments d'informations d'attribut ;
la réception, en provenance du dispositif de fourniture de données, de données fournies qui correspondent aux premières informations d'attribut, des valeurs de hachage de la pluralité de fragments d'informations d'attribut, et d'informations de signature de données qui contiennent les données fournies et les valeurs de hachage de la pluralité de fragments d'informations d'attribut ;
l'émission des données fournies, des valeurs de hachage de la pluralité de fragments d'informations d'attribut et des informations de signature vers un dispositif d'utilisation de données ; et
la divulgation de secondes informations d'attribut utilisées par le dispositif d'utilisation de données, parmi la pluralité de fragments d'informations d'attribut, au dispositif d'utilisation de données par la preuve sans apport de connaissance qui utilise les valeurs de hachage de la pluralité de fragments d'informations d'attribut.

2. Procédé de commande garanti selon la revendication 1, dans lequel le processus comprend en outre le fait d'amener le dispositif d'utilisation de données à prouver les informations de signature.

3. Procédé de commande garanti selon la revendication 1, dans lequel
les valeurs de hachage de la pluralité de fragments d'informations d'attribut sont des valeurs d'engagements pour chacun de la pluralité de fragments d'informations d'attribut.

4. Procédé de commande garanti selon la revendication 3, dans lequel
les valeurs de hachage de la pluralité de fragments d'informations d'attribut incluent en outre les valeurs des engagements pour une clé maître utilisée lorsque les données de certificat sont générées.

5. Procédé de commande garanti selon la revendication 1, dans lequel
une preuve des données de certificat et une preuve des informations de signature des données sont réalisées en utilisant une chaîne de blocs.

6. Dispositif de traitement d'informations comprenant :
une unité d'acquisition qui acquiert des données de certificat qui contiennent une pluralité de fragments d'informations d'attribut ;
une première unité de divulgation qui :
émet des valeurs de hachage de la pluralité de fragments d'informations d'attribut vers un dispositif de fourniture de données, et
divulgue des premières informations d'attribut qui identifient un individu parmi la pluralité de fragments d'informations d'attribut au dispositif de fourniture de données par une preuve sans apport de connaissance qui utilise les valeurs de hachage de la pluralité de fragments d'informations d'attribut ;
une unité de réception qui reçoit, en provenance du dispositif de fourniture de données, des données fournies qui correspondent aux premières informations d'attribut, les valeurs de hachage de la pluralité de fragments d'informations d'attribut, et des informations de signature de données qui contiennent les données fournies et les valeurs de hachage de la pluralité de fragments d'informations d'attribut ; et
une seconde unité de divulgation qui :
émet les données fournies, les valeurs de hachage de la pluralité de fragments d'informations d'attribut et les informations de signature vers un dispositif d'utilisation de données, et
divulgue des secondes informations d'attribut utilisées par le dispositif d'utilisation de données, parmi la pluralité de fragments d'informations d'attribut, au dispositif d'utilisation de données par la preuve sans apport de connaissance qui utilise les valeurs de hachage de la pluralité de fragments d'informations d'attribut.

7. Support de stockage non transitoire lisible par ordinateur stockant un programme de commande garanti qui amène au moins un ordinateur à exécuter un processus, le processus comprenant :
l'acquisition de données de certificat qui contiennent une pluralité de fragments d'informations d'attribut ;
l'émission de valeurs de hachage de la pluralité de fragments d'informations d'attribut vers un dispositif de fourniture de données ;
la divulgation de premières informations d'attribut qui identifient un individu parmi la pluralité de fragments d'informations d'attribut au dispositif de fourniture de données par une preuve sans apport de connaissance qui utilise les valeurs de hachage de la pluralité de fragments d'informations d'attribut ;
la réception, en provenance du dispositif de fourniture de données, de données fournies qui correspondent aux premières informations d'attribut, des valeurs de hachage de la pluralité de fragments d'informations d'attribut, et d'informations de signature de données qui contiennent les données fournies et les valeurs de hachage de la pluralité de fragments d'informations d'attribut ;
l'émission des données fournies, des valeurs de hachage de la pluralité de fragments d'informations d'attribut et des informations de signature vers un dispositif d'utilisation de données ; et
la divulgation de secondes informations d'attribut utilisées par le dispositif d'utilisation de données, parmi la pluralité de fragments d'informations d'attribut, au dispositif d'utilisation de données par la preuve sans apport de connaissance qui utilise les valeurs de hachage de la pluralité de fragments d'informations d'attribut.

8. Support de stockage non transitoire lisible par ordinateur selon la revendication 7, dans lequel le processus comprend en outre le fait d'amener le dispositif d'utilisation de données à prouver les informations de signature.

9. Support de stockage non transitoire lisible par ordinateur selon la revendication 7, dans lequel
les valeurs de hachage de la pluralité de fragments d'informations d'attribut sont des valeurs d'engagements pour chacun de la pluralité de fragments d'informations d'attribut.

10. Support de stockage non transitoire lisible par ordinateur selon la revendication 9, dans lequel
les valeurs de hachage de la pluralité de fragments d'informations d'attribut incluent en outre les valeurs des engagements pour une clé maître utilisée lorsque les données de certificat sont générées.

11. Support de stockage non transitoire lisible par ordinateur selon la revendication 7, dans lequel
une preuve des données de certificat et une preuve des informations de signature des données sont réalisées en utilisant une chaîne de blocs.
